# EUROPÄISCHE PATENTSCHRIFT

(11) **EP 4 021 785 B1**
(45) Veröffentlichungstag und Bekanntmachung des Hinweises auf die Patenterteilung: **02.10.2024**
(21) Anmeldenummer: 20785668.3
(22) Anmeldetag: 28.08.2020
(51) Int. Cl.: B62J 1/02, B62J 1/06, B62K 19/36, B62J 1/08

(54) **TELESKOPIERBARE SATTELSTÜTZE**
TELESCOPIC SADDLE SUPPORT
TIGE DE SELLE TÉLESCOPIQUE

(30) Priorität: 30.08.2019 AT 507572019
(43) Veröffentlichungstag der Anmeldung: 06.07.2022
(73) Patentinhaber: Lupaan GmbH, 4020 Linz (AT)
(72) Erfinder: EBERLBERGER, Lukas, 4470 Enns (AT)
(74) Vertreter: Torggler & Hofmann Patentanwälte - Innsbruck
(86) Internationale Anmeldenummer: PCT/AT2020/060322
(87) Internationale Veröffentlichungsnummer: WO 2021/035272

(56) Entgegenhaltungen:
- US-A1- 2012 104 810
- US-A1- 2012 104 810

## Beschreibung

Die Erfindung betrifft eine teleskopierbare Sattelstütze mit den Merkmalen des Oberbegriffs des Anspruchs 1.

Im Stand der Technik sind allgemein teleskopierbare Sattelstützen bekannt, mittels welchen die Position eines von der im Rahmen eines Fahrrads verbauten Sattelstütze gelagerten Sattels relativ zum Rahmen des Fahrrads innerhalb eines Teleskopierbereichs verstellbar ist. Der Teleskopierbereich erstreckt sich dabei, auf die Sattelstütze selbst bezogen, von einer minimalen Längserstreckung der Sattelstütze (eingefahrener Zustand) bis zu einer maximalen Längserstreckung der Sattelstütze (ausgefahrener Zustand). Die Sattelstütze wird dabei gewöhnlich so im Rahmen des Fahrrads montiert oder angeordnet, dass sich die gewünschte Sattelhöhe im ausgefahrenen Zustand (beispielsweise die gemessene Entfernung von der Mitte des Tretlagers des Fahrrads bis zur Oberkante des Sattels) bei der maximalen Längserstreckung der Sattelstütze ergibt.

Aus der WO 2017/011848 A1 der Anmelderin ist eine teleskopierbare Sattelstütze mit einem Teleskopelement und einem Stützelement bekannt, welche über einen Befestigungsabschnitt mit dem Sattelrohr eines Rahmens eines Fahrrads verbindbar ist. Eine gewünschte Sattelhöhe im ausgefahrenen Zustand der Sattelstütze wird über ein am Stützelement fixiertes Rastelement eingestellt, welches eine Positionierung des Teleskopelements relativ zum Stützelement erlaubt. Eine Teleskopierbewegung des Teleskopelements zum Stützelement, also die Teleskopierbewegung zum Ein- und Ausfahren der Sattelstütze im Fahrbetrieb des Fahrrads, kann durch eine gesondert ausgebildete Arretiervorrichtung freigegeben oder arretiert werden. Kräfte, die vom Sattel auf das Teleskopelement wirken, werden über die Arretiervorrichtung in das Stützelement eingeleitet. Dabei ist nachteilig, dass das Teleskopelement im Innenbereich im Wesentlichen über dessen gesamte Längserstreckung eine spezielle Ausgestaltung in Form von Radialnuten aufweisen muss, welche einen erhöhten Bearbeitungsaufwand bei der Herstellung des Teleskopelements sowie ggf. Nachteile für dessen Festigkeit mit sich bringt. Weiter muss die Ausgestaltung des Rastelements mit der Ausgestaltung der Arretiervorrichtung korrespondieren, da beide Verstellmechanismen mit den Radialnuten des Teleskopelements zusammenwirken.

Gleichermaßen ist die Ausgestaltung des Teleskopelements an die Ausgestaltung des Rastelements und der Arretiervorrichtung geknüpft.

Dokument US 2012/104810 A1 zeigt die Präambel des Anspruch 1.

Aufgabe der Erfindung ist es, eine teleskopierbaren Sattelstütze anzugeben, bei welcher die zuvor diskutierten Nachteile nicht auftreten. Diese Aufgabe wird von einer teleskopierbaren Sattelstütze gemäß dem Anspruch 1 gelöst. Vorteilhafte Ausführungen der Erfindung sind in den abhängigen Ansprüchen definiert.

Die Erfindung betrifft eine teleskopierbare Sattelstütze zur Lagerung eines Fahrradsattels, mit einer Stützeinheit, welche an oder in einem Rahmen eines Fahrrads befestigbar ist, und einer innerhalb eines vorgegebenen Teleskopierbereichs relativ zu der Stützeinheit geführt bewegbaren Teleskopeinheit, wobei sich der Teleskopierbereich von einer minimalen Längserstreckung der Sattelstütze bis zu einer maximalen Längserstreckung der Sattelstütze erstreckt.

Der Teleskopierbereich ist der Bereich des möglichen Ein- und Ausfahrens der Sattelstütze im Fahrbetrieb des Fahrrads und ist im Wesentlichen von der Verstellung der maximalen Längserstreckung der Sattelstütze unabhängig. Die Verstellung der maximalen Längserstreckung der Sattelstütze - und damit einhergehend die Verstellung der minimalen Längserstreckung der Sattelstütze - kann im Wesentlichen einer Anpassung der Höhe des Sattels an die Körpergröße oder Beinlänge eines Fahrers entsprechen.

Die Teleskopeinheit kann im Wesentlichen jenem Teil der Sattelstütze entsprechen, welcher in Abhängigkeit der Ein- oder Ausfahrstellung von außen sichtbar aus dem Fahrradrahmen hervorsteht, wenn die Sattelstütze in einem solchen verbaut ist.

Die Stützeinheit kann an einem Ende an dem Fahrradrahmen, insbesondere am Sattelrohr des Fahrradrahmens im Bereich des Tretlagers, befestigbar sein und kann grundsätzlich der Einleitung einer oder eines auf den Sattel und/oder die Teleskopeinheit ausgeübten axialen Kraft oder Drehmoments in den Fahrradrahmen dienen.

Zur Ankopplung der Teleskopeinheit an die Stützeinheit ist eine zwischen der Teleskopeinheit und der Stützeinheit angeordnete Koppelvorrichtung vorgesehen. Ein der Stützeinheit zugeordneter Teil der Koppelvorrichtung ist dabei fix mit der Stützeinheit verbunden.

Die Koppelvorrichtung kann allgemein einen der Teleskopeinheit zugeordneten Teil und einen der Stützeinheit zugeordneten Teil aufweisen.

Zur lösbaren Blockierung der geführten Teleskopierbewegung der Teleskopeinheit relativ zur Stützeinheit ist eine Blockiervorrichtung vorgesehen. In blockiertem Zustand wird durch die Blockiervorrichtung eine Teleskopierbewegung der Teleskopeinheit relativ zur Stützeinheit verhindert. Ein Lösen der Blockiervorrichtung erlaubt ein Ein- und Ausfahren der Teleskopeinheit innerhalb des Teleskopierbereichs der Sattelstütze, wie dies während des Fahrbetriebs des Fahrrads gewünscht ist.

Durch die Kombination der Merkmale, dass die Koppelvorrichtung einen Verstellmechanismus aufweist, über den die maximale Längserstreckung der Sattelstütze verstellbar ist, und dass eine Übertragung einer auf die Teleskopeinheit wirkenden axialen Kraft auf die Stützeinheit über die Koppelvorrichtung erfolgt, kann die Teleskopeinheit im Wesentlichen unabhängig von der Stützeinheit und insbesondere im Wesentlichen unabhängig von der Blockiervorrichtung ausgebildet werden.

Eine Verstellung der maximalen Längserstreckung der Sattelstütze, insbesondere zur Anpassung der Höhe eines gelagerten Sattels an die Körpergröße oder Beinlänge eines Fahrers, kann über den Verstellmechanismus der Koppelvorrichtung erfolgen. Dabei kann sich durch den Verstellmechanismus eine Relativposition der Teleskopeinheit relativ zur Koppelvorrichtung festlegen lassen.

Unter einer axialen Kraft kann eine Kraft oder Kraftkomponente verstanden werden, die in Richtung einer Längsachse der Teleskopeinheit und/oder der Stützeinheit wirkt.

Insbesondere in einem blockierten Zustand der Blockiervorrichtung kann eine axial auf die Teleskopeinheit wirkende Kraft beispielsweise eine durch das Körpergewicht eines auf dem Sattel des Fahrrads sitzenden Fahrers hervorgerufene Kraft, in anderen Worten also eine Gewichtskraft, oder eine manuell auf den Sattel oder die Teleskopeinheit ausgeübte Kraft sein. Gleichermaßen kann bei einer aufgehobenen Blockierung durch eine solche Kraft oder solche Kräfte eine Teleskopierbewegung, beispielsweise zum Ein- und/oder Ausfahren der Sattelstütze, angetrieben werden. Auch kann eine axial auf die Teleskopeinheit wirkende Kraft beispielsweise eine aus einem Kraftspeicher stammende Kraft sein. Dies kann beispielsweise eine die Teleskopierbewegung antreibende Kraft, insbesondere eine Rückstellkraft zum Ein- und/oder Ausfahren der Sattelstütze, sein.

Allgemein kann vorgesehen sein, dass axial zwischen der Teleskopeinheit und der Stützeinheit wirkende Kräfte über die Koppelvorrichtung übertragen werden.

Es kann vorgesehen sein, dass im Wesentlichen die gesamte auf die Teleskopeinheit wirkende axiale Kraft über die Koppelvorrichtung auf die Stützeinheit übertragen wird. Dabei kann die Teleskopeinheit vorteilhaft über den Verstellmechanismus an zumindest zwei unterschiedlichen Koppelpositionen an die Stützeinheit ankoppelbar sein. Der Verstellmechanismus kann dadurch zumindest zwei Einstellungen der maximalen Längserstreckung der Sattelstütze ermöglichen. Es soll nicht ausgeschlossen sein, dass die Teleskopeinheit über den Verstellmechanismus an einer Vielzahl an unterschiedlichen Koppelpositionen an die Stützeinheit ankoppelbar ist.

In einer Ausführung kann die Teleskopeinheit rohrförmig ausgebildet sein und die Stützeinheit und/oder die Koppelvorrichtung zumindest teilweise innerhalb der Teleskopeinheit, insbesondere im Inneren eines von der rohrförmigen Teleskopeinheit ausgebildeten Hohlraums, angeordnet sein.

Entsprechend der Erfindung, weist der Verstellmechanismus der Koppelvorrichtung einen der Teleskopeinheit zugeordneten Verstellteil mit einer profilierten Einkerbung auf.

Der Verstellteil kann vorzugsweise in Form einer Hülse, einer Zahnstange oder einer Spindel ausgebildet sein. Die Hülse kann ein zylindrischer Hohlkörper mit einer gewissen Wandstärke sein, dessen Innenfläche eine profilierte Einkerbung aufweist. Die Zahnstange oder Spindel kann ein zylindrischer Körper mit außenliegenden radialen Einkerbungen sein.

Der Verstellteil kann kraftschlüssig zur Übertragung von axialen Kräften mit der Teleskopeinheit verbunden sein.

Erfindungsgemäss, weist der der Stützeinheit zugeaordnete Koppelteil mit einer korrespondierenden profilierten Einkerbung auf.

Die profilierten Einkerbungen des Koppelteils sind so ausgebildet, dass eine formschlüssige Verbindung zwischen dem Verstellteil und dem Koppelteil vorliegt. Zwischen dem Verstellteil und dem Koppelteil liegt formschlüssige Verbindung der Teleskopeinheit mit der Stützeinheit vor.

Der Koppelteil kann kraftschlüssig zur Übertragung von axialen Kräften mit der Stützeinheit verbunden sein.

Die profilierten Einkerbungen im Verstellteil und/oder im Koppelteil können dabei in Form eines Gewindes oder in Form von Radialnuten oder radialen Vorsprüngen ausgebildet sein. Das Gewinde, die Radialnuten oder die radialen Vorsprünge können umfänglich begrenzt ausgebildet sein, beispielsweise in Form eines unterbrochenen Gewindes, oder in Form von lateral oder radial abstehenden und umfänglich stückweise ausgebildeten Vorsprüngen (die Einkerbungen können hier auch dem ausgesparten Material entsprechen).

Erfindungsgemäss ist der Verstellteil drehbar in oder an der Teleskopeinheit gelagert und die Teleskopeinheit ist durch eine Drehbewegung des Verstellteils relativ zum Koppelteil an die Stützeinheit ankoppelbar. Der Verstellteil kann begrenzt oder unbegrenzt bewegbar sein.

Insbesondere kann durch eine Drehbewegung des Verstellteils relativ zum Koppelteil eine formschlüssige Verbindung zur Übertragung von axialen Kräften zwischen dem Verstellteil und dem Koppelteil hergestellt oder aufgehoben werden.

Erfindungsgemäss ist der Verstellteil drehbar in einem Innenbereich der rohrförmig ausgebildeten Teleskopeinheit gelagert und koaxial mit der Teleskopeinheit angeordnet.

In Ausführungen, in welcher der Verstellteil in Form einer Hülse, einer Spindel oder einer Zahnstange ausgebildet ist, können die Hülse, die Spindel oder die Zahnstange im Innenbereich der rohrförmigen ausgebildeten Teleskopeinheit, insbesondere koaxial, angeordnet sein. Die Hülse, die Spindel oder die Zahnstange können drehbar und gegen axiale Verschiebungen gesichert in der Teleskopeinheit angeordnet sein.

Es kann allgemein von Vorteil sein, wenn die Teleskopeinheit eine axiale und/oder radiale Öffnung aufweist, durch welche die Koppelvorrichtung von außerhalb der Teleskopeinheit, vorzugsweise über einen Hebel, betätigbar ist. So kann beispielsweise an einem in Montagelage oberen, dem Sattel zugewandten, Ende der Teleskopeinheit eine axiale und/oder radiale Öffnung in der Teleskopeinheit vorgesehen sein, durch welche die Koppelvorrichtung, insbesondere der der Teleskopeinheit zugeordnete Teil der Koppelvorrichtung, betätigbar ist. Ein Hebel oder ein Stellrad kann dabei unmittelbar mit der Koppelvorrichtung zusammenwirken.

In einer Ausführung, in welcher der Verstellteil drehbar in oder an der Teleskopeinheit gelagert ist, kann durch die axiale und/oder radiale Öffnung in der Teleskopeinheit der Verstellteil der Koppelvorrichtung relativ zur Teleskopeinheit verdrehbar sein. In Ausführungen, in welcher der Verstellteil in Form einer Hülse, einer Spindel oder einer Zahnstange ausgebildet ist, können die Hülse, die Spindel oder die Zahnstange durch die axiale und/oder radiale Öffnung in der Teleskopeinheit relativ zur Teleskopeinheit verdreht werden. Ein Hebel oder ein Stellrad kann dabei mit der Hülse, der Spindel oder der Zahnstange verbunden sein.

Es kann vorgesehen sein, dass der Koppelteil der Koppelvorrichtung drehfest an der Stützeinheit gelagert ist. Es kann vorgesehen sein, dass der Koppelteil selbst keine translatorische und/oder rotatorische Relativbewegung zur Stützeinheit ausführen kann. Es kann allgemein vorteilhaft sein, wenn die Koppelvorrichtung unabhängig von Blockiervorrichtung betätigbar ist.

Die geführte Bewegung kann eine durch den vorgegebenen Teleskopierbereich begrenzte, zwangsgeführte translatorische Teleskopierbewegung der Teleskopeinheit relativ zur Stützeinheit ist. Insbesondere können die Teleskopiereinheit und die Stützeinheit der zueinander zwangsgeführt sein, dass im Wesentlichen nur eine gegebenenfalls begrenzte translatorische Bewegung zueinander möglich ist.

Zur Führung der Teleskopierbewegung der Teleskopeinheit relativ zur Stützeinheit kann eine Führungsvorrichtung mit Mitteln zur Führung vorgesehen sein. Diese können beispielsweise in Form zumindest einer sich in Längsrichtung der Teleskopeinheit, insbesondere einem Teleskoprohr der Teleskopeinheit, erstreckenden Nut und zumindest einem an der Stützeinheit angeordneten Nutenstein, oder umgekehrt, ausgebildet sein. Eine solche Nut kann an einem Ende gegebenenfalls lösbar verschlossen ausgebildet sein, wodurch sich ein vollständiges Ausziehen der Teleskopeinheit aus der Sattelstütze vermeiden lassen kann.

Die Blockiervorrichtung zur lösbaren Blockierung der geführten Teleskopierbewegung der Teleskopeinheit relativ zur Stützeinheit kann hydraulisch ausgebildet sein. Eine hydraulische Blockiervorrichtung kann eine stufenlose Blockierung der Teleskopierbewegung erlauben.

Die Blockiervorrichtung kann in die Stützeinheit integriert sein.

Es kann vorgesehen sein, dass eine Übertragung einer auf die Teleskopeinheit wirkenden axialen Kraft auf die Blockiervorrichtung der Stützeinheit über die Koppelvorrichtung erfolgt
Bei einer bevorzugten Ausführung kann die Stützeinheit ein mit Hydraulikfluid arbeitender Hydraulikzylinder sein und die Blockiervorrichtung somit in der Stützeinheit integriert ausgebildet sein.

Zur Befestigung der Sattelstütze an oder in einem Fahrrad eines Fahrrads kann die Stützeinheit eine Befestigungseinrichtung aufweisen. Über die Befestigungsvorrichtung kann die Sattelstütze mit dem Rahmen verbindbar sein. Vorzugsweise ist die Sattelstütze über die Befestigungsvorrichtung formschlüssig mit dem Rahmen vebindbar, beispielsweise über eine Verschraubung.

Es kann vorteilhaft sein, wenn die Blockiervorrichtung einen Kraftspeicher, vorzugsweise einen pneumatischen Kraftspeicher beispielsweise in Form einer Gasdruckfeder, aufweist.

Bei einer besonders bevorzugten Ausführung kann die Stützeinheit ein mit Hydraulikfluid arbeitender Hydraulikzylinder mit Gasdruckfeder sein.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Figur 1a bis 1f: Seiten- und Schnittansichten einer ersten Ausführung der Sattelstütze, wobei sich die Sattelstütze in einem gekoppelten Zustand mit im Wesentlichen maximaler Längserstreckung der Sattelstütze befindet,
- Figur 2a bis 2e: Seiten- und Schnittansichten einer ersten Ausführung der Sattelstütze, wobei sich die Sattelstütze in einem entkoppelten Zustand mit gegenüber der Figur 1 verringerter Längserstreckung der Sattelstütze befindet,
- Figur 3a bis 3e: Seiten- und Schnittansichten einer ersten Ausführung der Sattelstütze, wobei sich die Sattelstütze in einem gekoppelten Zustand mit gegenüber der Figur 1 verringerter Längserstreckung der Sattelstütze befindet,
- Figur 4a bis 4g: Seiten- und Schnittansichten einer zweiten Ausführung der Sattelstütze, wobei sich die Sattelstütze in einem gekoppelten Zustand mit im Wesentlichen maximaler Längserstreckung der Sattelstütze befindet,
- Figur 5a bis 5f: Seiten- und Schnittansichten einer zweiten Ausführung der Sattelstütze, wobei sich die Sattelstütze in einem entkoppelten Zustand mit gegenüber der Figur 4 verringerter Längserstreckung der Sattelstütze befindet,
- Figur 6a bis 6e: Seiten- und Schnittansichten einer zweiten Ausführung der Sattelstütze, wobei sich die Sattelstütze in einem gekoppelten Zustand mit gegenüber der Figur 4 verringerter Längserstreckung der Sattelstütze befindet, und
- Figur 7a und 7b: eine Gegenüberstellung von Schnittansichten einer zweiten Ausführung der Sattelstütze in einem gekoppelten und einem entkoppelten Zustand.

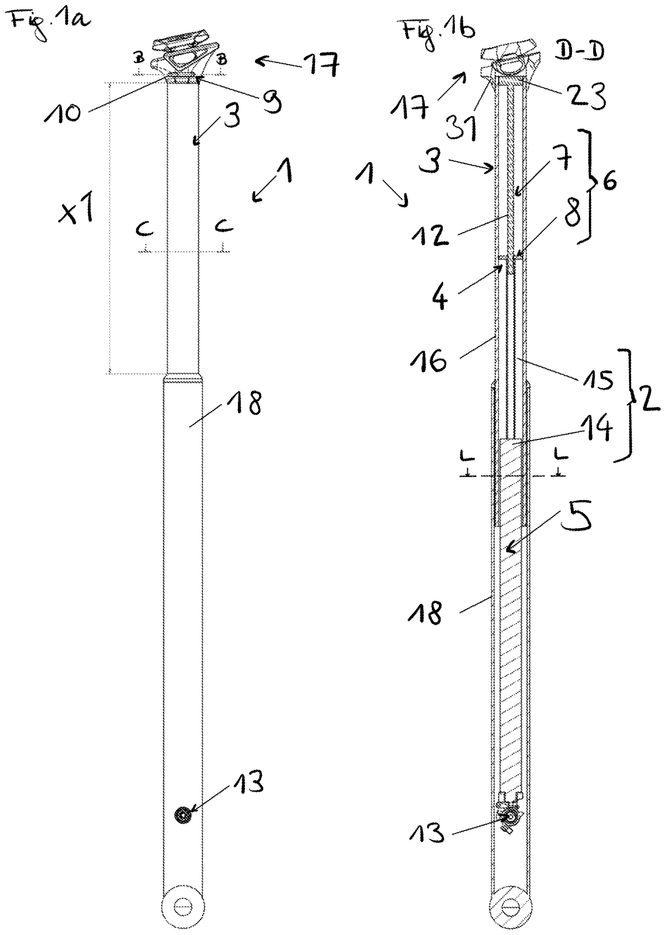

In Figur 1a ist eine im Sattelrohr eines Rahmens 18 angeordnete Sattelstütze 1 in einer ersten Ausführung gezeigt. Von außen sichtbar ist die aus dem Rahmen 18 teilweise hervorragende Teleskopeinheit 3 mit einer Sattelklemme 17 zur Lagerung eines Fahrradsattels. Die Sattelstütze 1 ist über die Befestigungseinrichtung 13 mit dem Rahmen 18 verbunden. Die Teleskopeinheit 3 weist in der gezeigten Ausführung eine radiale Öffnung 9 auf, durch welche die Koppelvorrichtung 4 (siehe auch Figur 1b) von außerhalb der Teleskopeinheit 3 über einen aus der radialen Öffnung 9 hervorstehenden Hebel 10 betätigbar ist.

Die Blockiervorrichtung 5 ist in dieser Ausführung der Sattelstütze 1 als ein Teil der Stützeinheit 2 ausgebildet.

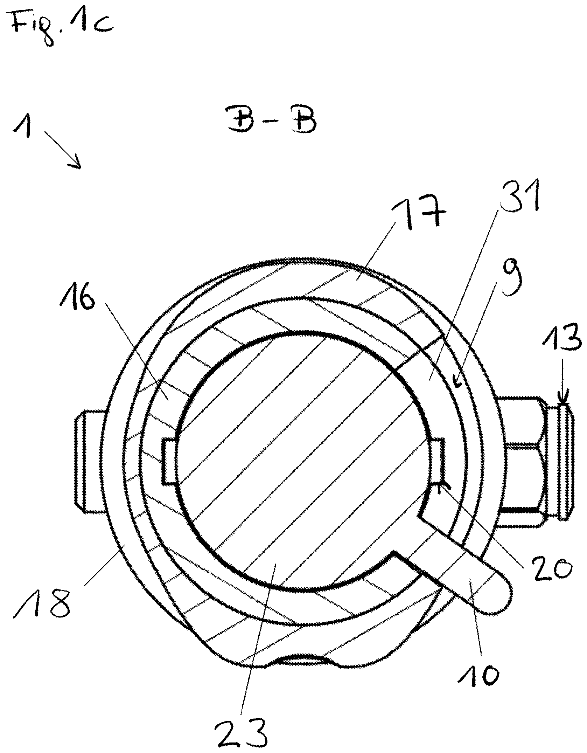

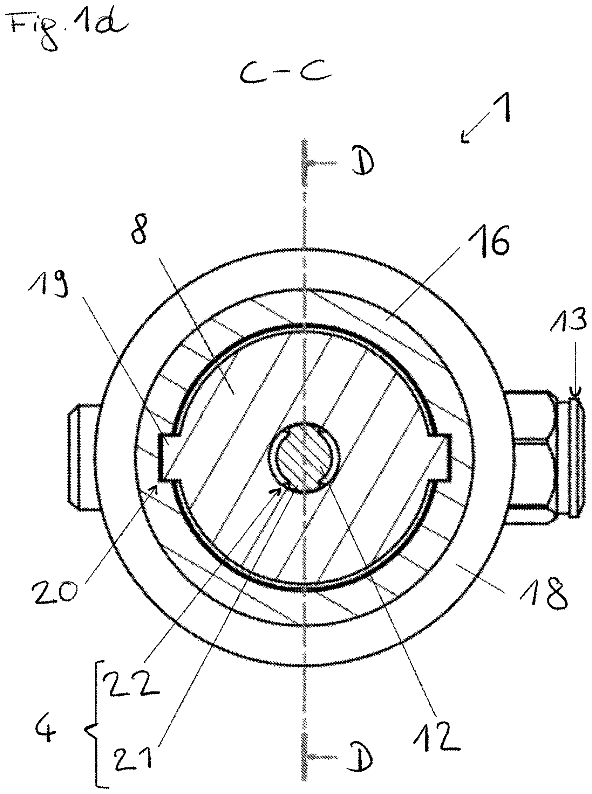

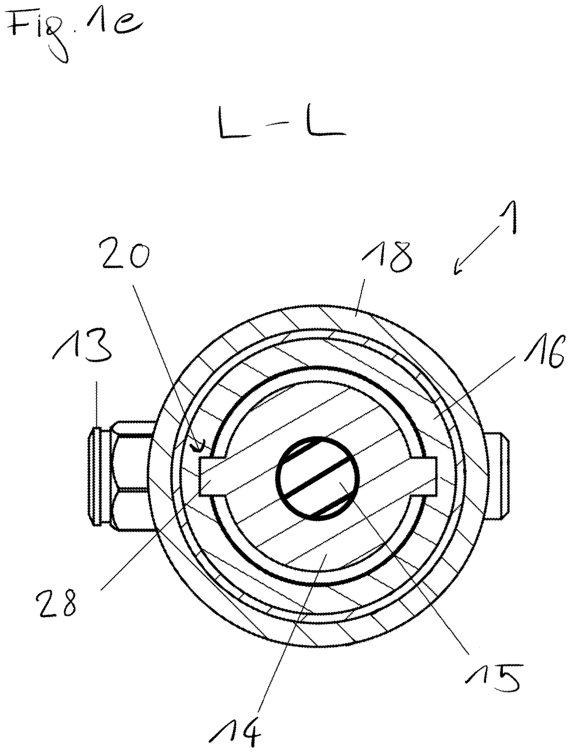

Die in Figur 1a und 1b eingezeichneten Schnittebenen B-B, C-C und L-L sind in den Figuren 1c, 1d und 1e, respektive, gezeigt.

In Figur 1b ist eine Schnittdarstellung entlang einer Längsachse der Sattelstütze 1 der Figur 1a gezeigt (Linie D-D in Figur 1d). In der Schnittdarstellung ist eine Stützeinheit 2 in einer Ausführung eines in einem Zylinder 14 gelagerten Kolbens mit Kolbenstange 15 sichtbar. Zwischen der Teleskopeinheit 3 und der Stützeinheit 2 ist eine Koppelvorrichtung 4 (für nähere Details siehe Figur 1d) angeordnet, mittels welcher die Teleskopeinheit 3 an die Stützeinheit 2 angekoppelt ist. Die Koppelvorrichtung 4 weist in der gezeigten Ausführung einen Verstellmechanismus 6 mit einem der Teleskopeinheit 3 zugeordneten Verstellteil 7 in Form einer Zahnstange 12 und einem der Stützeinheit 2 zugeordneten Koppelteil 8 auf. Der Verstellteil 7 in Form der Zahnstange 12 ist koaxial und drehbar in einem Innenbereich der rohrförmig als Teleskoprohr 16 ausgebildeten Teleskopeinheit 3 gelagert. Die Lagerung des Verstellteils 7 im Kopf 31 der Teleskopeinheit 3 erfolgt in dieser Ausführung über den Kopf 23 der Zahnstange 12 und eignet sich vorteilhaft zur Übertragung axial wirkender Kräfte.

Die Sattelstütze 1 befindet sich in einem gekoppelten Zustand (vergleiche dazu Figur 1d) mit im Wesentlichen maximaler Längserstreckung der Sattelstütze 1 (charakterisiert durch den Überstand x1 der Teleskopeinheit 3 aus dem Rahmen 18 heraus).

Ein Vergleich mit Figur 1a zeigt, dass in dieser Ausführung durch die radiale Öffnung 9 in der Teleskopeinheit 3 der Verstellteil 7 in Form der der Zahnstange 12 des Verstellmechanismus 6 relativ zur Teleskopeinheit 3 verdrehbar ist. Der Koppelteil 8 ist dabei vorteilhaft drehfest an der Stützeinheit 2 gelagert und auch gegen ein Verdrehen gegenüber der Teleskopeinheit 3 gesichert (vergleiche hierzu auch Figur 1d).

Figur 1c zeigt eine Schnittdarstellung entlang der in Figur 1a dargestellten Linie B-B. Der Schnitt erfolgt dabei von außen nach innen durch die Sattelklemme 17, das Teleskoprohr 16 und den Kopf 23 der Zahnstange 12. Zu erkennen sind die radial im Kopf 31 der Teleskopeinheit 3 eingebrachte Öffnung 9 und der mit dem Kopf 23 der Zahnstange 12 verbundene Hebel 10. Auch sind entlang der Längsachse des Teleskoprohrs 16 an dessen Innenseite in dieses eingebrachte Nuten 20 erkennbar.

Es kann vorgesehen sein, dass die im Teleskoprohr 16 ausgebildeten Nuten 20 am unteren Ende des Teleskoprohrs 16 lösbar verschlossen sind, wodurch ein ungewolltes vollständiges Ausziehen der Teleskopeinheit 3 aus der Sattelstütze 1 verhindert werden kann.

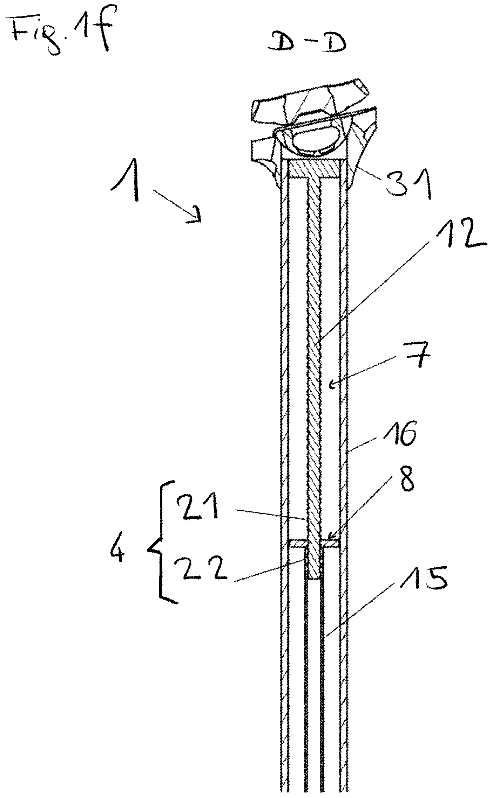

In Figur 1d ist eine Schnittdarstellung entlang der Linie C-C der Figur 1a gezeigt. Der Schnitt erfolgt dabei von außen nach innen durch das Teleskoprohr 16, den Koppelteil 8 und die Zahnstange 12. Dabei ist erkennbar, dass die profilierten Einkerbung im als Zahnstange 12 ausgebildeten Verstellteil 7 (siehe auch Figur 1b) in Form von umfänglich begrenzten radialen Vorsprüngen 21 (im Wesentlichen Zähne der Zahnstange 12) ausgebildet sind (sind siehe auch Figur 1f). Die radialen Vorsprünge 21 stehen formschlüssig in Eingriff mit entsprechend im Koppelteil 8 ausgebildeten profilierten Einkerbungen in Form von Radialnuten 22 (ähnlich einem unterbrochenen Innengewinde) zur formschlüssigen Verbindung der Teleskopeinheit 3 mit der Stützeinheit 2. Die Koppelvorrichtung 4 ist in dieser Ausführung durch die radialen Vorsprünge 21 in dem als Zahnstange 12 ausgebildeten Verstellteil 7 und den korrespondierenden profilierten Einkerbungen in Form von Radialnuten 22 im Koppelteil 8 ausgebildet.

Durch die Vielzahl der radialen Vorsprünge 21 und der profilierten Einkerbungen in Form von Radialnuten 22 ist die Teleskopeinheit 3 an einer Vielzahl von unterschiedlichen Koppelpositionen an die Stützeinheit 2 ankoppelbar.

Durch die formschlüssige Verbindung der Teleskopeinheit 3 mit der Stützeinheit 2 über die radialen Vorsprünge 21 und die korrespondierenden profilierten Einkerbungen in Form von Radialnuten 22 kann in einem angekoppelten Zustand eine axiale Kraft zwischen der Teleskopeinheit 3 und der Stützeinheit 2 übertragen werden.

Weiter sind in Figur 1d am Koppelteil 8 angeordnete oder ausgebildete Nutensteine 19, welche in Nuten 20 des Teleskoprohrs16 gelagert sind, gezeigt. Durch die Nutensteine 19 und die Nuten 20 kann ein Verdrehen des Koppelteils 8 gegenüber dem Teleskoprohr 16 verhindert werden.

In Figur 1e ist eine Schnittdarstellung entlang der Linie L-L der Figur 1b gezeigt. Der Schnitt erfolgt dabei von außen nach innen durch den Rahmen 18, das Teleskoprohr 16, den Zylinder 14 und die Kolbenstange 15. Dabei ist erkennbar, dass am Zylinder 14 Nutensteine 28 ausgebildet (oder anders als dargestellt angeordnet) sind, welche in die Nuten 20 des Teleskoprohrs 16 eingreifen. Dadurch kann eine lineare Führung der Teleskopeinheit 3 relativ zur Stützeinheit 2 erreicht und ein Verdrehen der Teleskopeinheit 3 relativ zur Stützeinheit 2 verhindert werden. Da der Zylinder 14 der Stützeinheit 2 der Sattelstütze 1 über die Befestigungseinrichtung 13 mit dem Rahmen 18 verbunden ist (siehe dazu auch Figur 1b), kann ein Verdrehen der Teleskopeinheit 3 und somit eines von der Sattelstütze 1 gelagerten Sattels relativ zum Rahmen 18 verhindert werden.

Figur 1f zeigt eine Detailansicht der Figur 1b. Dabei sind die radialen Vorsprünge 21 des als Zahnstange 12 ausgebildeten Verstellteils 7 sowie die profilierten Einkerbungen in Form von Radialnuten 22 im Koppelteil 8 erkennbar.

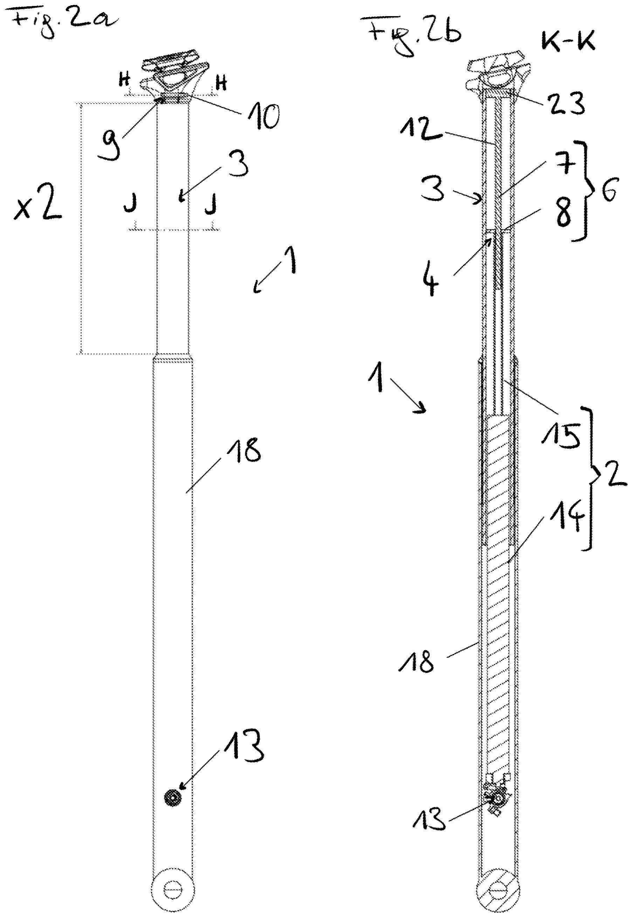

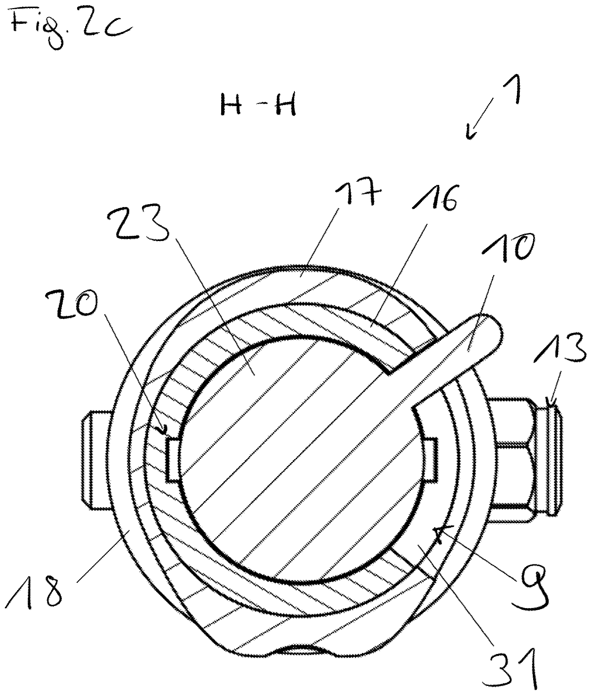

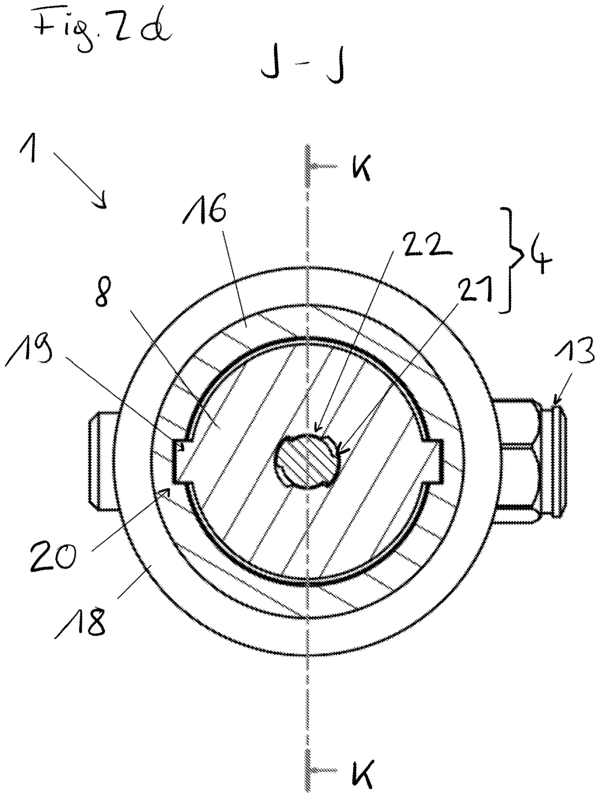

In den Figuren 2a bis 2e befindet sich die in den Figuren 1a bis 1f gezeigte Sattelstütze 1 in einem entkoppelten Zustand (siehe dazu speziell Figur 2d) mit gegenüber der Figur 1 verringerter Längserstreckung der Sattelstütze (charakterisiert durch den verringerten Überstand x2 der Teleskopeinheit 3 aus dem Rahmen 18 heraus). Gegenüber der Figur 1 ist durch ein Verdrehen des Hebels 10 (siehe dazu auch Figur 2c) die Teleskopeinheit 3 von der Stützeinheit 2 entkoppelt worden. Zur Verringerung der Längserstreckung wurde - ohne eine Relativbewegung des Kolbens der Kolbenstange 15 zum Zylinder 14 der Stützeinheit 2, also ohne eine wie zuvor beschriebene Teleskopierbewegung der Teleskopiereinheit 3 - die Teleskopiereinheit 3 relativ zur Stützeinheit 2 verstellt. Dies ist auch dadurch erkennbar, dass der als Zahnstange 12 ausgebildeten Verstellteil 7 im Vergleich der Figur 2b (Schnitt entlang der Linie K-K in Figur 2d) zur Figur 1 weiter in die Kolbenstange 15 hineinragt.

In der Figur 2c ist ein Schnitt entlang der in Figur 2a gezeigten Linie H-H gezeigt. Im Vergleich zur Figur 1c ist erkennbar, dass der Hebel 10 und damit der Kopf 23 der Zahnstange 12 verdreht worden ist.

In der Figur 2d ist ein Schnitt entlang der in Figur 2a gezeigten Linie J-J gezeigt. Dabei ist erkennbar, dass das durch eine Verdrehung der Zahnstange 12 die radialen Vorsprünge 21 des als Zahnstange 12 ausgebildeten Verstellteils 7 und die profilierten Einkerbungen in Form von Radialnuten 22 im Koppelteil 8 außer Eingriff gebracht wurden, wodurch die Teleskopeinheit 3 und die Stützeinheit 2 voneinander entkoppelt worden sind.

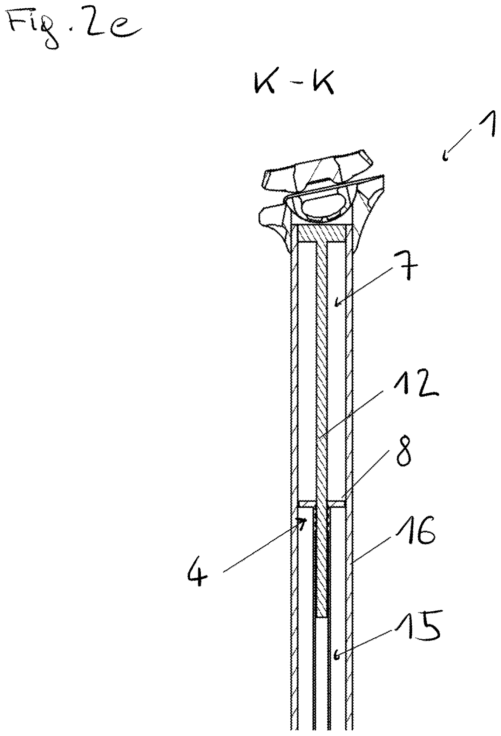

Figur 2e zeigt eine Detailansicht der Figur 2b. Durch die Verdrehung der Zahnstange 12 sind die umfänglich begrenzt ausgebildeten radialen Vorsprünge 21 außerhalb der Schnittebene (Linie K-K in Figur 2d) gelegen und deshalb in der Figur 2e nicht sichtbar.

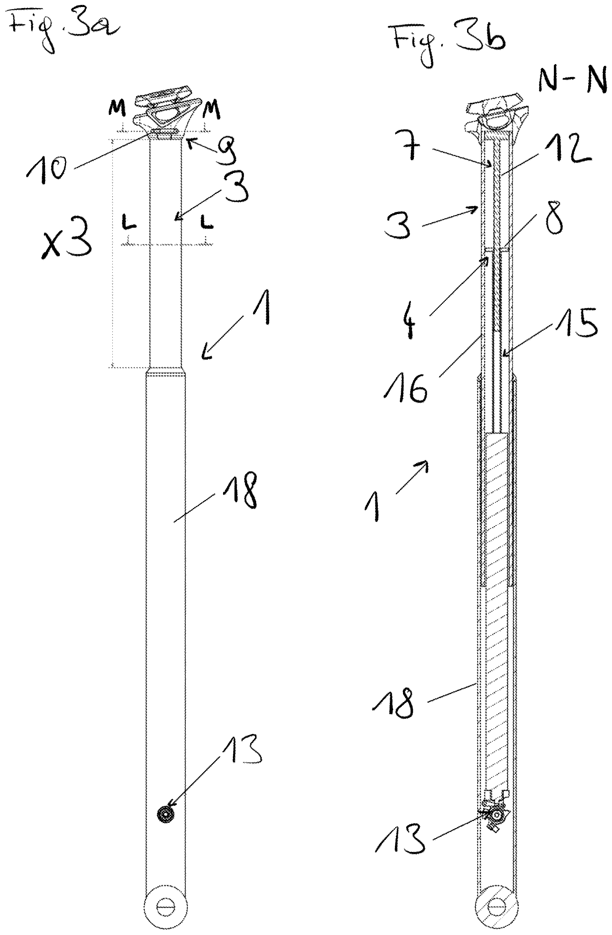

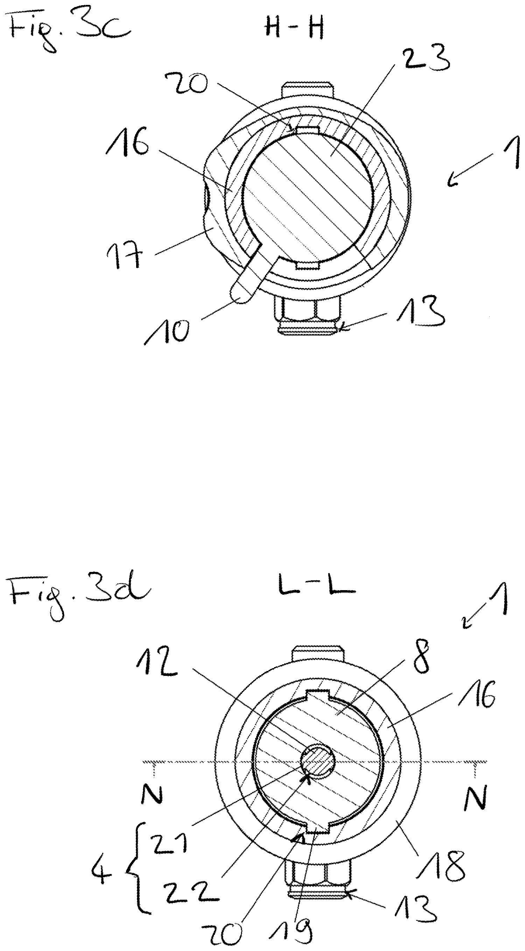

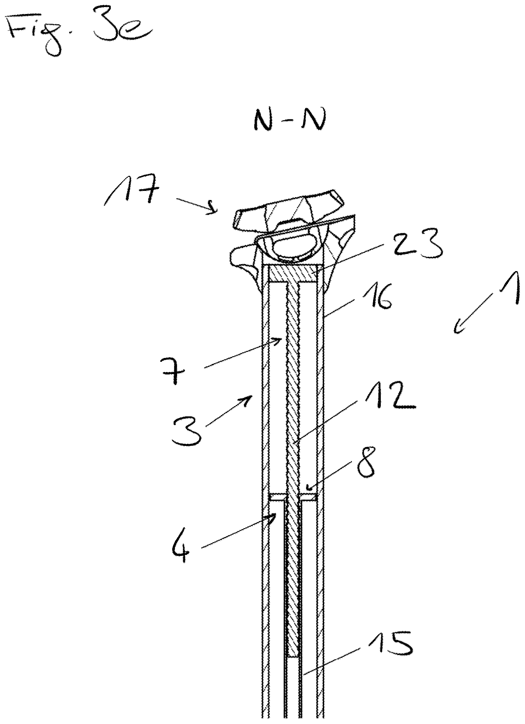

In den Figuren 3a bis 3e befindet sich die in den Figuren 1 und 2 gezeigte Sattelstütze 1 in einem gekoppelten Zustand (siehe dazu speziell Figur 3d) mit gegenüber der Figur 1 und auch der Figur 2 verringerter maximaler Längserstreckung der Sattelstütze (charakterisiert durch den weiter verringerten Überstand x3 der Teleskopeinheit 3 aus dem Rahmen 18 heraus). Gegenüber der Figur 2 ist durch ein Verdrehen des Hebels 10 (siehe dazu auch Figur 3c) die Teleskopeinheit 3 wieder an die Stützeinheit 2 angekoppelt worden. Zur weiteren Verringerung der Längserstreckung wurde - wieder ohne eine Relativbewegung des Kolbens der Kolbenstange 15 zum Zylinder 14 der Stützeinheit 2, also ohne eine wie zuvor beschriebene Teleskopierbewegung der Teleskopiereinheit 3 - vor dem Ankoppeln die Teleskopiereinheit 3 weiter relativ zur Stützeinheit 2 verstellt. Dies ist auch dadurch erkennbar, dass der als Zahnstange 12 ausgebildete Verstellteil 7 im Vergleich der Figur 3b (Schnitt entlang der Linie N-N in Figur 3d) zur Figur 2 noch ein Stück weiter in die Kolbenstange 15 hineinragt.

Die Schnittdarstellungen der Figuren 3c (Schnitt entlang der Linie H-H in Figur 3a), 3d (Schnitt entlang der Linie L-L in Figur 3a) und 3e (Detailansicht der Figur 3b) entsprechen im Wesentlichen jenen der Figuren 1c, 1d und 1b, in welchen sich die Sattelstütze 1 ebenso in einem gekoppelten Zustand befindet.

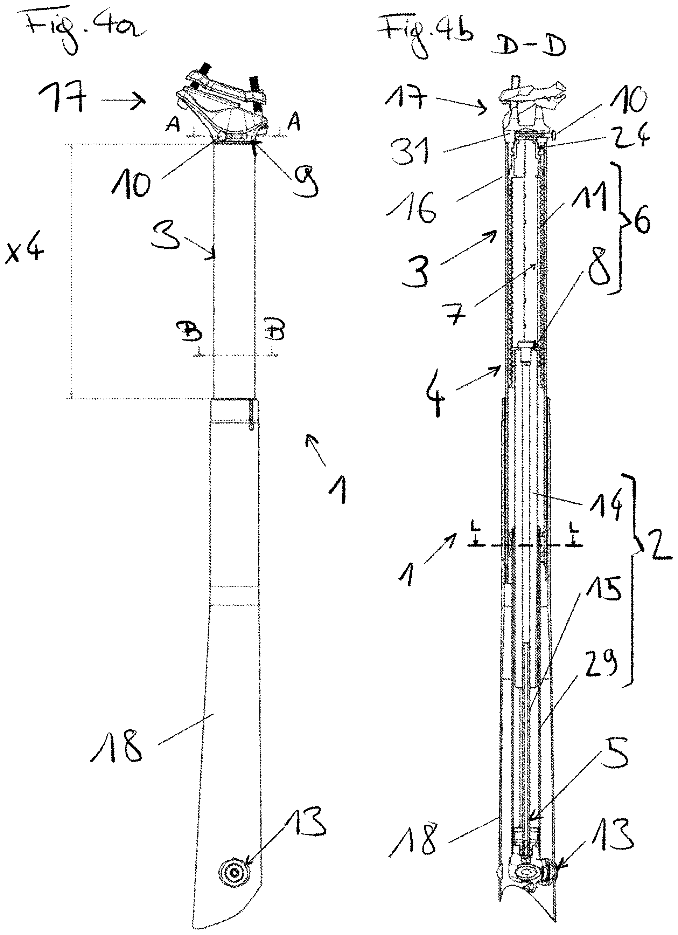

In Figur 4a bis 4e sind Seiten- und Schnittansichten einer zweiten Ausführung der Sattelstütze 1 gezeigt, wobei sich die Sattelstütze 1 in einem gekoppelten Zustand mit im Wesentlichen maximaler Längserstreckung x4 befindet.

In Figur 4a ist eine im Sattelrohr eines Rahmens 18 angeordnete Sattelstütze 1 in einer zweiten Ausführung gezeigt. Von außen sichtbar ist die aus dem Rahmen 18 teilweise hervorragende Teleskopeinheit 3 mit einer Sattelklemme 17 zur Lagerung eines Fahrradsattels. Die Sattelstütze 1 ist über die Befestigungseinrichtung 13 mit dem Rahmen 18 verbunden. Die Teleskopeinheit 3 weist in der gezeigten Ausführung eine radiale Öffnung 9 auf, durch welche die Koppelvorrichtung 4 (siehe auch Figur 4b) von außerhalb der Teleskopeinheit 3 über einen aus der radialen Öffnung 9 hervorstehenden Hebel 10 betätigbar ist.

Die Blockiervorrichtung 5 ist in dieser Ausführung der Sattelstütze 1 als ein Teil der Stützeinheit 2 ausgebildet.

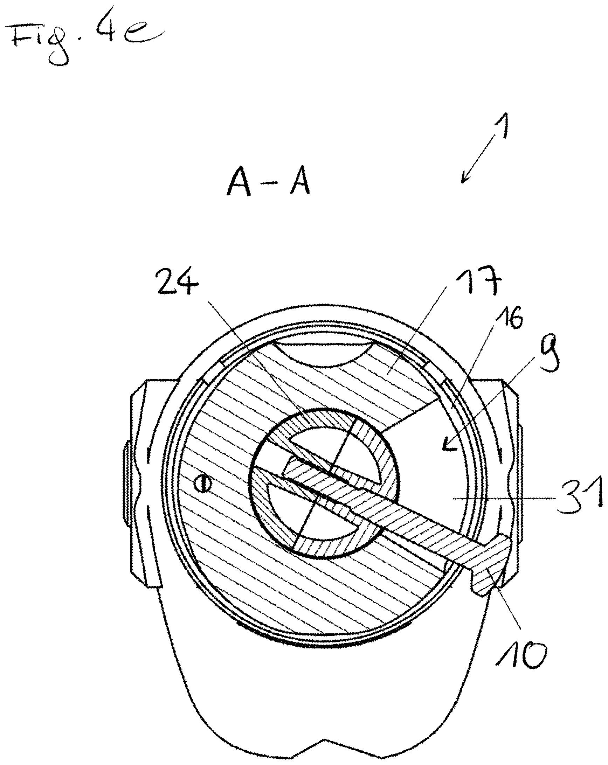

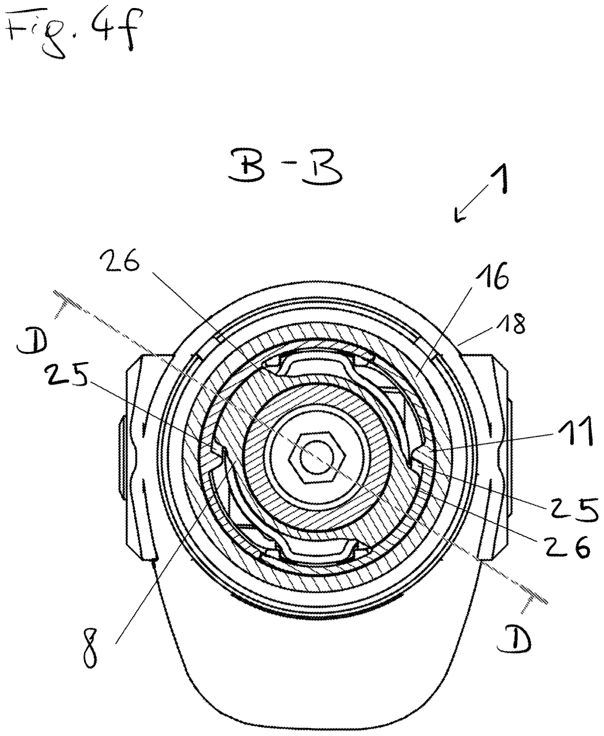

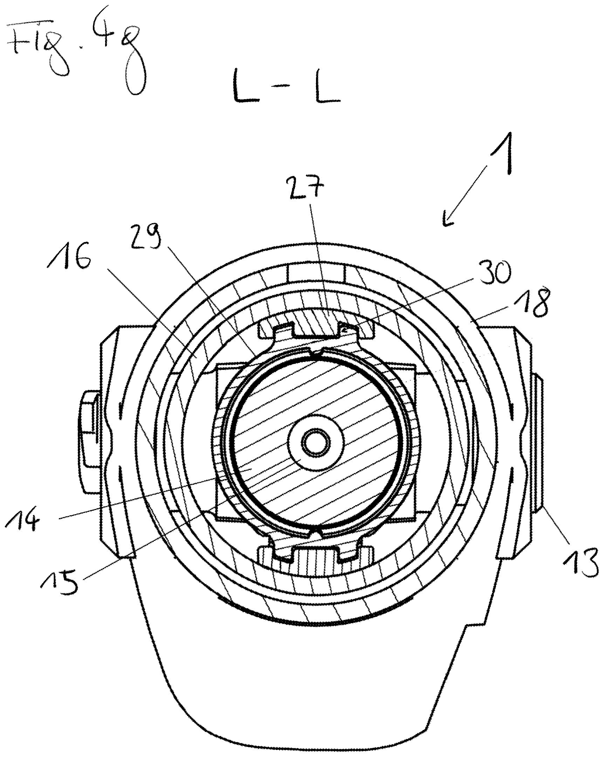

Die in Figur 4a und 4b eingezeichneten Schnittebenen A-A, B-B und L-L sind in den Figuren 4e, 4f und 4g, respektive, gezeigt.

In Figur 4b ist eine Schnittdarstellung entlang einer Längsachse der Sattelstütze 1 der Figur 1a gezeigt (Linie D-D in Figur 4f). In der Schnittdarstellung ist eine Stützeinheit 2 in einer Ausführung eines in einem Zylinder 14 gelagerten Kolbens mit Kolbenstange 15 sichtbar. Die Stützeinheit weist in dieser Ausführung ein Stützrohr 29 zur Führung der Teleskopeinheit 3 auf (siehe dazu auch Figur 4g). Ein Vergleich mit der in den Figuren 1 bis 3 gezeigten ersten Ausführung der Sattelstütze 1 zeigt, dass die Anordnung der Stützeinheit 2 in der zweiten Ausführung im Wesentlichen invertiert ist. Die Anordnung der Stützeinheit 2 kann jedoch unabhängig von der Ausgestaltung der Koppelvorrichtung 4 erfolgen.

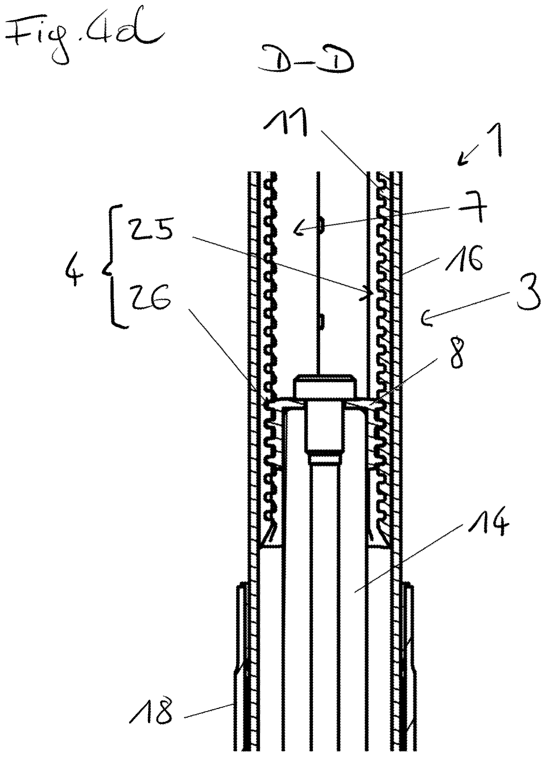

Zwischen der Teleskopeinheit 3 und der Stützeinheit 2 ist eine Koppelvorrichtung 4 (für nähere Details siehe Figuren 4d und 4f) angeordnet, mittels welcher die Teleskopeinheit 3 an die Stützeinheit 2 angekoppelt ist. Die Koppelvorrichtung 4 weist in der gezeigten Ausführung einen Verstellmechanismus 6 mit einem der Teleskopeinheit 3 zugeordneten Verstellteil 7 in Form einer Hülse 11 und einem der Stützeinheit 2 zugeordneten Koppelteil 8 auf. Der Verstellteil 7 in Form der Hülse 11 ist koaxial und drehbar in einem Innenbereich der rohrförmig als Teleskoprohr 16 ausgebildeten Teleskopeinheit 3 gelagert. Die Lagerung des Verstellteils 7 im Kopf 31 der Teleskopeinheit 3 erfolgt in dieser Ausführung über den Kopf 24 der Hülse 11 und eignet sich vorteilhaft zur Übertragung axial wirkender Kräfte.

Die Sattelstütze 1 befindet sich in einem gekoppelten Zustand (vergleiche dazu Figur 4f) mit im Wesentlichen maximaler Längserstreckung der Sattelstütze 1 (charakterisiert durch den Überstand x4 der Teleskopeinheit 3 aus dem Rahmen 18 heraus).

Ein Vergleich mit Figur 4a zeigt, dass in dieser Ausführung durch die radiale Öffnung 9 in der Teleskopeinheit 3 der Verstellteil 7 in Form der der Hülse 11 des Verstellmechanismus 6 relativ zur Teleskopeinheit 3 verdrehbar ist. Der Koppelteil 8 ist dabei vorteilhaft drehfest an der Stützeinheit 2 gelagert und auch gegen ein Verdrehen gegenüber der Teleskopeinheit 3 gesichert.

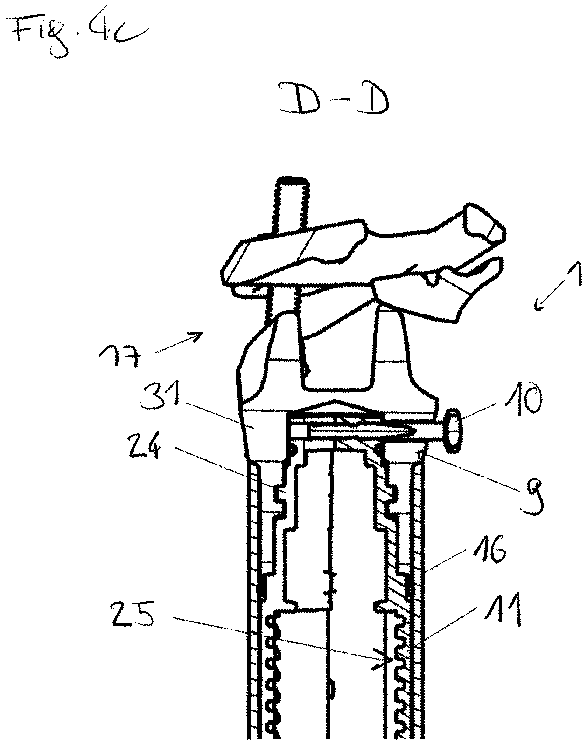

Die Figuren 4c und 4d zeigen Detailansichten des oberen und unteren Endes der Sattelstütze 1 gemäß der Figur 4b. Zu erkennen sind in Figur 4c die radial im Kopf 31 der Teleskopeinheit 3 eingebrachte Öffnung 9 und der mit dem Kopf 24 der Hülse 11 verbundene Hebel 10. Die rohrförmigen ausgebildete Hülse 11 weist an der Innenseite profilierte Einkerbungen in Form von Radialnuten 25 auf, mittels welchen zusammen mit den in Figur 4d gezeigten, am Koppelteil 8 ausgebildeten radialen Vorsprüngen 26 eine formschlüssige Verbindung zwischen der Teleskopeinheit 3 und der Stützeinheit 2 herstellbar ist. Die Koppelvorrichtung 4 ist in dieser Ausführung durch die Radialnuten 25 in dem als Hülse 11 ausgebildeten Verstellteil 7 und den korrespondierenden radialen Vorsprüngen 26 im Koppelteil 8 ausgebildet.

Durch die Vielzahl der Radialnuten 25 und der korrespondierenden radialen Vorsprünge 26 ist die Teleskopeinheit 3 an einer Vielzahl von unterschiedlichen Koppelpositionen an die Stützeinheit 2 ankoppelbar.

Figur 4e zeigt eine Schnittdarstellung entlang der in Figur 4a dargestellten Linie A-A. Der Schnitt erfolgt dabei von außen nach innen durch die Sattelklemme 17 und den Kopf 24 der Hülse 11. Zu erkennen sind die radial im Kopf der Teleskopeinheit 3 eingebrachte Öffnung 9 und der mit dem Kopf 24 der Hülse 11 verbundene Hebel 10.

In Figur 4f ist eine Schnittdarstellung entlang der Linie B-B der Figur 4a gezeigt. Die Schnittebene liegt knapp oberhalb des Koppelteils 8. Der Schnitt erfolgt dabei von außen nach innen durch das Teleskoprohr 16, die Hülse 11 und den Koppelteil 8. Dabei ist erkennbar, dass die profilierten Einkerbungen im als Hülse 11 ausgebildeten Verstellteil 7 in Form von umfänglich begrenzten Radialnuten 25 ausgebildet sind (sind siehe auch Figur 4d). Die Radialnuten 25 stehen formschlüssig in Eingriff mit entsprechend im Koppelteil 8 ausgebildeten umfänglich begrenzten radialen Vorsprüngen 26 zur formschlüssigen Verbindung der Teleskopeinheit 3 mit der Stützeinheit 2.

Durch die formschlüssige Verbindung der Teleskopeinheit 3 mit der Stützeinheit 2 über die Radialnuten 25 und die korrespondierenden radialen Vorsprünge 26 kann in einem angekoppelten Zustand eine axiale Kraft zwischen der Teleskopeinheit 3 und der Stützeinheit 2 übertragen werden.

In Figur 4g ist eine Schnittdarstellung entlang der Linie L-L der Figur 4b gezeigt. Der Schnitt erfolgt dabei von außen nach innen durch den Rahmen 18, das Teleskoprohr 16, das Stützrohr 29, den Zylinder 14 und die Kolbenstange 15. Dabei ist erkennbar, dass am Teleskoprohr 16 Nutensteine 27 angeordnet (beispielsweise verschraubt, oder anders als dargestellt daran ausgebildet) sind, welche in die Nuten 30 des Stützrohrs 29 eingreifen. Dadurch kann eine lineare Führung der Teleskopeinheit 3 relativ zur Stützeinheit 2 erreicht und ein Verdrehen der Teleskopeinheit 3 relativ zur Stützeinheit 2 verhindert werden. Eine Führung des Zylinders 14 relativ zum Stützrohr 29 kann auf ähnliche Art und Weise (Nut und Nutenstein) erfolgen. Da das Stützrohr 29 der Stützeinheit 2 der Sattelstütze 1 über die Befestigungseinrichtung 13 mit dem Rahmen 18 verbunden ist (siehe dazu auch Figur 4b), kann ein Verdrehen der Teleskopeinheit 3 und somit eines von der Sattelstütze 1 gelagerten Sattels relativ zum Rahmen 18 verhindert werden.

Die Nut 30 des Stützrohrs 29 kann am oberen Ende des Stützrohrs 29 lösbar verschlossen sein, wodurch ein ungewolltes vollständiges Ausziehen der Teleskopeinheit 3 aus der Sattelstütze 1 verhindert werden kann.

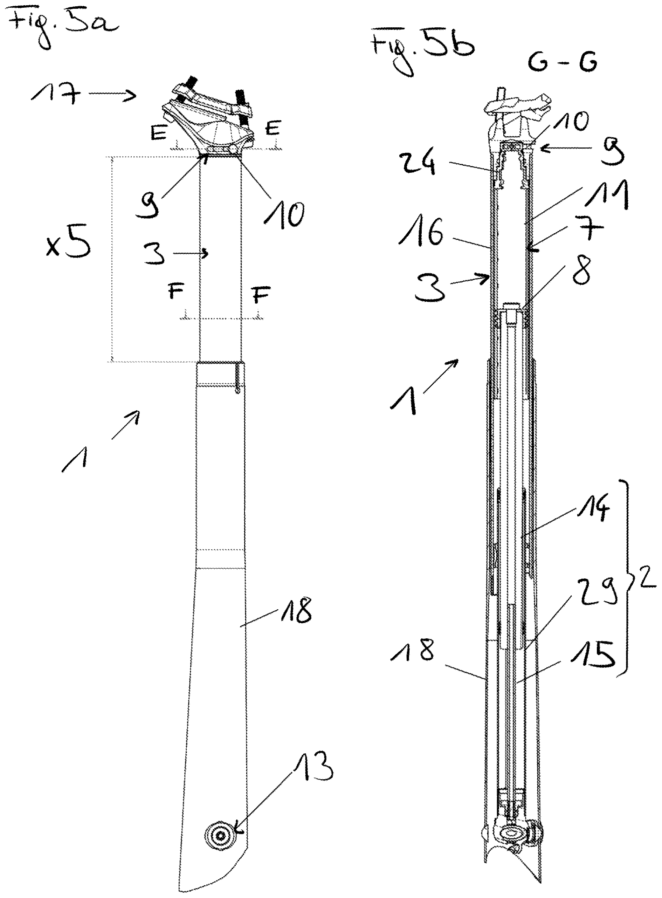

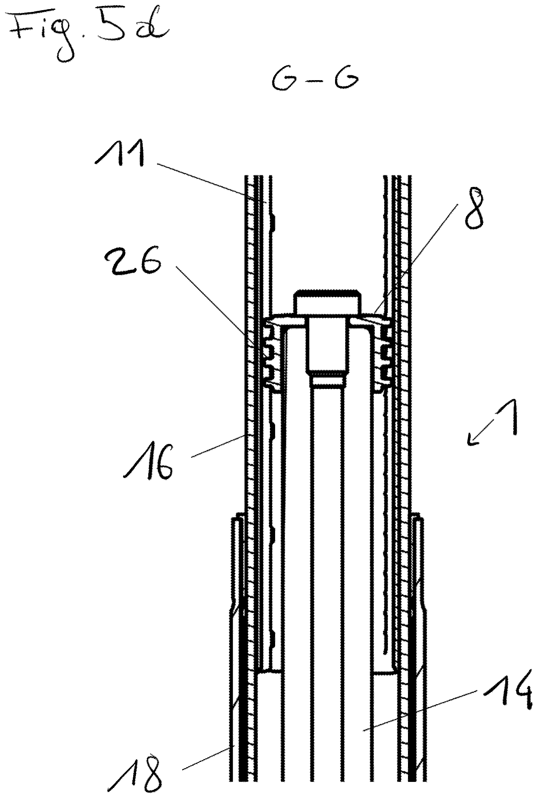

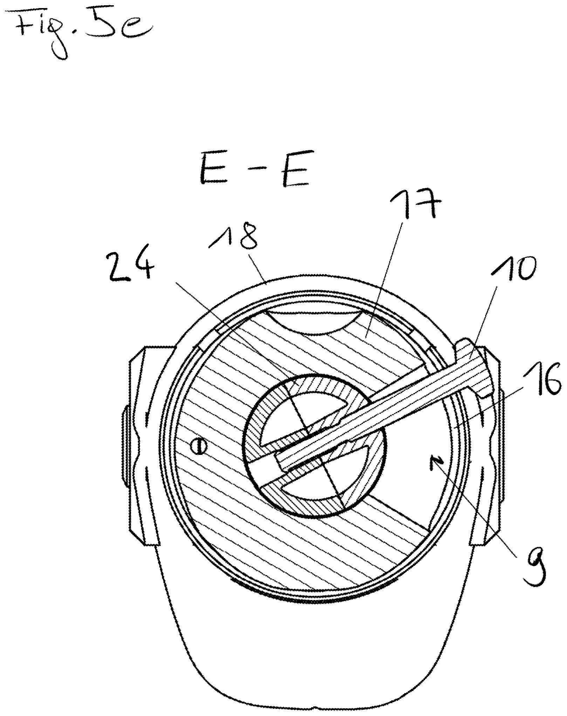

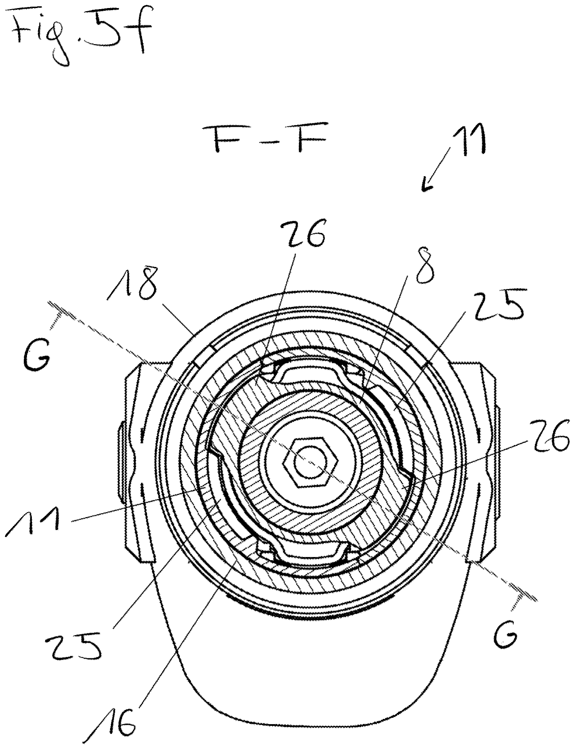

In den Figuren 5a bis 5f befindet sich die in den Figuren 4a bis 4f gezeigte Sattelstütze 1 in einem entkoppelten Zustand (siehe dazu speziell Figuren 5d und 5f) mit gegenüber der Figur 4 verringerter Längserstreckung der Sattelstütze 1 (charakterisiert durch den verringerten Überstand x5 der Teleskopeinheit 3 aus dem Rahmen 18 heraus). Gegenüber der Figur 4 ist durch ein Verdrehen des Hebels 10 (siehe dazu auch Figur 5e) die Teleskopeinheit 3 von der Stützeinheit 2 entkoppelt worden. Zur Verringerung der Längserstreckung wurde - ohne eine Relativbewegung des Kolbens der Kolbenstange 15 zum Zylinder 14 der Stützeinheit 2, also ohne eine wie zuvor beschriebene Teleskopierbewegung der Teleskopiereinheit 3 - die Teleskopiereinheit 3 relativ zur Stützeinheit 2 verstellt. Dies ist auch dadurch erkennbar, dass das untere Ende des als Hülse 11 ausgebildeten Verstellteils 7 im Vergleich der Figur 5b (Schnitt entlang der Linie G-G in Figur 5f) zur Figur 4 weiter über den Koppelteil 8 hinausragt.

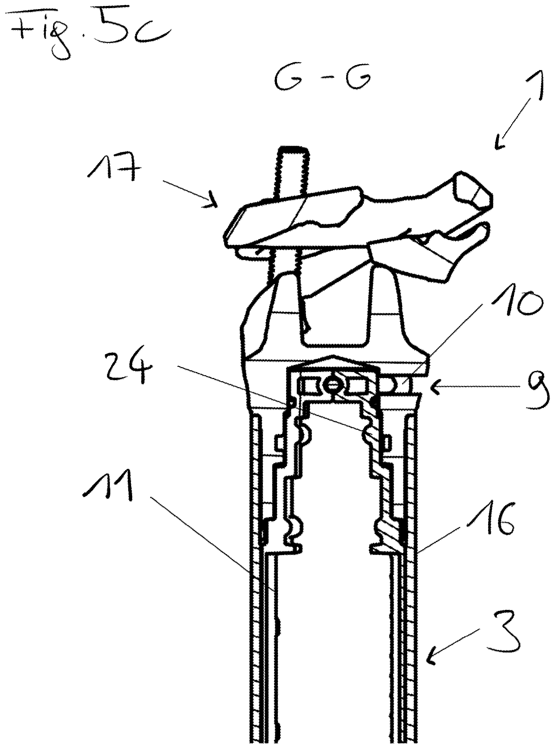

Die Figuren 5c und 5d zeigen Detailansichten des oberen und unteren Endes der Sattelstütze 1 gemäß der Figur 5b. Durch die Verdrehung der Hülse 11 über den Hebel 10 (vergleiche Figur 4c) zur Entkopplung der Teleskopeinheit 3 und der Stützeinheit 2 sind die umfänglich begrenzt ausgebildeten Radialnuten 25 außerhalb der Schnittebene (Linie G-G in Figur 5f) gelegen und deshalb in der Figur 5c und 5d nicht sichtbar.

In der Figur 5e ist ein Schnitt entlang der in Figur 5a gezeigten Linie H-H gezeigt. Im Vergleich zur Figur 4e ist erkennbar, dass der Hebel 10 und damit der Kopf 24 der Hülse 11 verdreht worden ist.

In Figur 5f ist analog zur Figur 4f eine Schnittdarstellung entlang der Linie F-F der Figur 5a gezeigt. Die Schnittebene liegt wieder knapp oberhalb des Koppelteils 8. Die umfänglich begrenzten Radialnuten 25 der Hülse 11 sind durch ein Verdrehen außer Eingriff mit den im Koppelteil 8 ausgebildeten umfänglich begrenzten radialen Vorsprüngen 26 gebracht worden.

Durch die nunmehr entkoppelte Verbindung der Teleskopeinheit 3 mit der Stützeinheit 2 kann ein Verschieben der Teleskopeinheit 3 relativ zur Stützeinheit 2 ermöglicht werden.

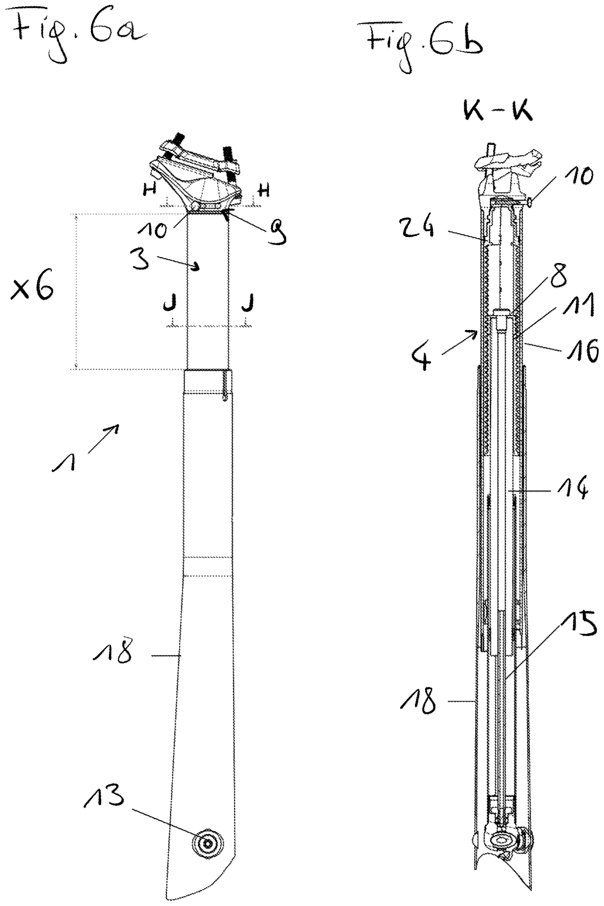

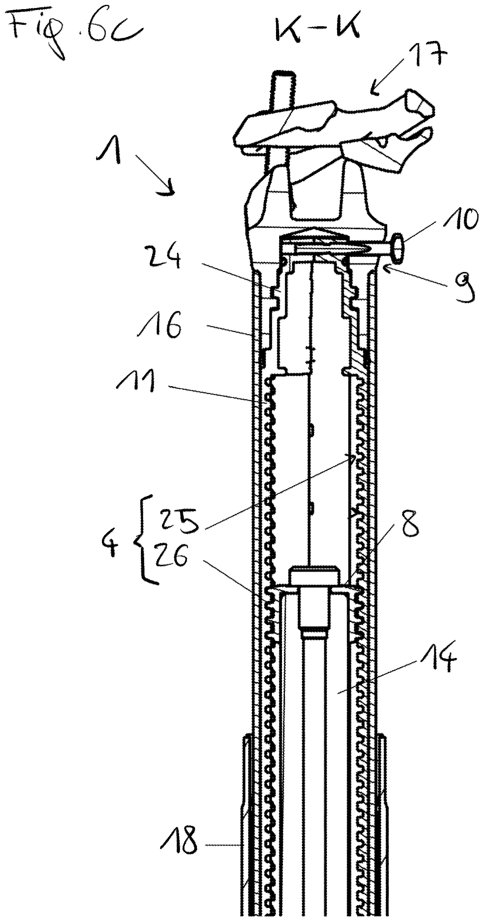

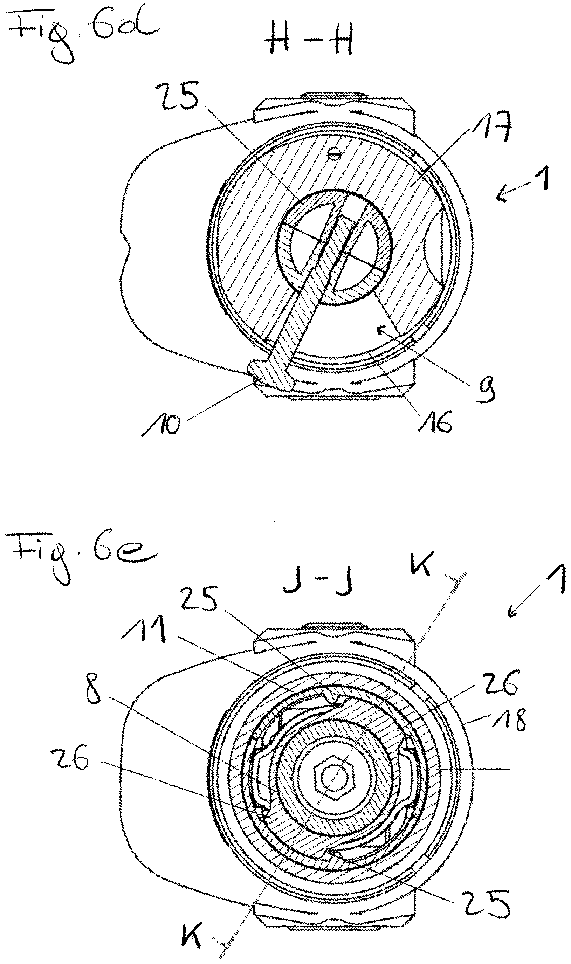

In den Figuren 6a bis 6e befindet sich die in den Figuren 4 und 5 gezeigte Sattelstütze 1 in einem gekoppelten Zustand (siehe dazu speziell Figuren 6c und 6e) mit gegenüber der Figur 4 und auch der Figur 5 verringerter maximaler Längserstreckung der Sattelstütze 1 (in Figur 6a charakterisiert durch den weiter verringerten Überstand x6 der Teleskopeinheit 3 aus dem Rahmen 18 heraus). Gegenüber der Figur 5 ist durch ein Verdrehen des Hebels 10 (siehe dazu auch Figur 6d) die Teleskopeinheit 3 wieder an die Stützeinheit 2 angekoppelt worden. Zur weiteren Verringerung der Längserstreckung wurde - wieder ohne eine Relativbewegung des Kolbens der Kolbenstange 15 zum Zylinder 14 der Stützeinheit 2, also ohne eine wie zuvor beschriebene Teleskopierbewegung der Teleskopiereinheit 3 - vor dem Ankoppeln die Teleskopiereinheit 3 weiter relativ zur Stützeinheit 2 verstellt. Dies ist auch dadurch erkennbar, dass das untere Ende des als Hülse 11 ausgebildeten Verstellteils 7 im Vergleich der Figur 6b (Schnitt entlang der Linie K-K in Figur 6e) zur Figur 5 noch weiter über den Koppelteil 8 hinausragt
Die Schnittdarstellungen der Figuren 6c (Detailansicht der Figur 6b), 6d (Schnitt entlang der Linie H-H in Figur 6a) und 6e (Schnitt entlang der Linie J-J in Figur 6e) entsprechen im Wesentlichen jenen der Figuren 4c, 4d, 4e und 4f, in welchen sich die Sattelstütze 1 ebenso in einem gekoppelten Zustand befindet.

Anders als dargestellt kann der Verstellmechanismus 6 für die erste Ausführung der Sattelstütze 1 mit einer Spindel mit durchgängigem Außengewinde anstelle der Zahnstange 12 und einem korrespondierenden durchgängigen Innengewinde im Koppelteil 8 anstelle der Radialnuten 22 ausgebildet sein. Analog kann für die zweite Ausführung der Sattelstütze 1 die Hülse 11 mit einem durchgängigen Innengewinde und der Koppelteil 8 mit einem durchgängigen Außengewinde anstelle der Radialnuten 25 und den radialen Vorsprüngen 26 ausgebildet sein. Eine Betätigung des Verstellmechanismus 6 kann in einem solchen Fall beispielsweise jeweils über ein Stellrad erfolgen.

Es soll auch nicht ausgeschlossen sein, dass anstelle des Hebels 10 ein Stellrad vorgesehen ist.

Es soll nicht ausgeschlossen sein, dass der Hebel 10 (oder ein Stellrad) anders als dargestellt durch eine axiale Öffnung der Teleskopeinheit 3 betätigbar ist.

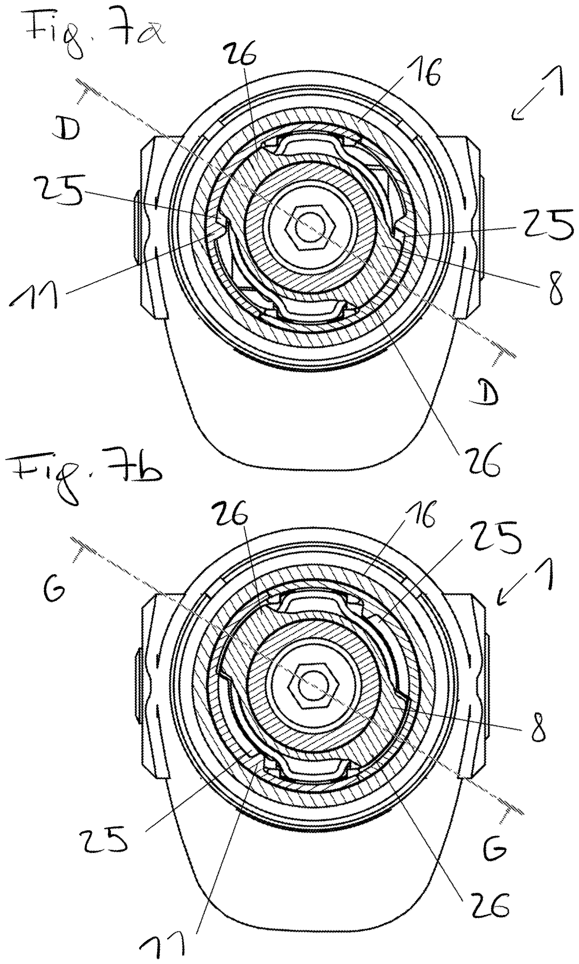

In den Figuren 7a und 7b ist zur besseren Veranschaulichung eine Gegenüberstellung der Sattelstütze 1 in der zweiten Ausführung in einem gekoppelten Zustand (Figur 7a) und in einem entkoppelten Zustand (Figur 7b) gezeigt. In einem Vergleich der Figur 7a mit Figur 7b ist ersichtlich, dass durch eine Drehung der Hülse 11 gegen den Uhrzeigersinn eine formschlüssige Verbindung der Radialnuten 25 mit den radialen Vorsprünge 26 aufgelöst (Übergang Figur 7a zu 7b) oder hergestellt (Übergang Figur 7b zu 7a) werden kann.

### Bezugszeichenliste:

- 1: Sattelstütze
- 2: Stützeinheit
- 3: Teleskopeinheit
- 4: Koppelvorrichtung
- 5: Blockiervorrichtung
- 6: Verstellmechanismus
- 7: Verstellteil
- 8: Koppelteil
- 9: Öffnung
- 10: Hebel
- 11: Hülse
- 12: Zahnstange
- 13: Befestigungseinrichtung
- 14: Zylinder
- 15: Kolbenstange
- 16: Teleskoprohr
- 17: Sattelklemme
- 18: Rahmen
- 19: Nutenstein Koppelteil
- 20: Nut Teleskoprohr
- 21: radialer Vorsprung Zahnstange
- 22: Radialnut Koppelteil
- 23: Kopf Zahnstange
- 24: Kopf Hülse
- 25: Radialnut Hülse
- 26: radialer Vorsprung Koppelteil
- 27: Nutenstein Teleskoprohr
- 28: Nutenstein Zylinder
- 29: Stützrohr
- 30: Nut Stützrohr
- 31: Kopf Teleskopeinheit

## Patentansprüche

1. Teleskopierbare Sattelstütze (1) zur Lagerung eines Fahrradsattels, mit
- einer Stützeinheit (2), welche an oder in einem Rahmen eines Fahrrads befestigbar ist, und
- einer innerhalb eines vorgegebenen Teleskopierbereichs relativ zu der Stützeinheit (2) geführt bewegbaren Teleskopeinheit (3), wobei sich der Teleskopierbereich von einer minimalen Längserstreckung der Sattelstütze (1) bis zu einer maximalen Längserstreckung der Sattelstütze (1) erstreckt,
- einer zwischen der Teleskopeinheit (3) und der Stützeinheit (2) angeordneten Koppelvorrichtung (4), wobei ein der Stützeinheit (2) zugeordneter Teil der Koppelvorrichtung (4) fix mit der Stützeinheit (2) verbunden ist und wobei die Teleskopeinheit (3) über die Koppelvorrichtung (4) an die Stützeinheit (2) ankoppelbar ist,
- einer Blockiervorrichtung (5) zur lösbaren Blockierung der geführten Teleskopierbewegung der Teleskopeinheit (3) relativ zur Stützeinheit (2),
- die Koppelvorrichtung (4) weist einen Verstellmechanismus (6) auf, über den die maximale Längserstreckung der Sattelstütze (1) verstellbar ist, und eine Übertragung einer auf die Teleskopeinheit (3) wirkenden axialen Kraft auf die Stützeinheit (2) über die Koppelvorrichtung (4) erfolgt, wobei der Verstellmechanismus (6) der Koppelvorrichtung (4) einen der Teleskopeinheit (3) zugeordneten Verstellteil (7) mit einer profilierten Einkerbung (21, 25) aufweist und einen der Stützeinheit (2) zugeordneten Koppelteil (8) mit einer korrespondierenden profilierten Einkerbung (22, 26) zur formschlüssigen Verbindung der Teleskopeinheit (3) mit der Stützeinheit (2) aufweist, wobei der Verstellteil (7) drehbar in oder an der Teleskopeinheit (3) gelagert ist und die Teleskopeinheit (3) durch eine Drehbewegung des Verstellteils (7) relativ zum Koppelteil (8) an die Stützeinheit (2) ankoppelbar ist, **dadurch gekennzeichnet, dass** der Verstellteil (7) drehbar in einem Innenbereich der rohrförmig ausgebildeten Teleskopeinheit (3) gelagert ist und koaxial mit der Teleskopeinheit (3) angeordnet ist.

2. Teleskopierbare Sattelstütze nach Anspruch 1, wobei über den Verstellmechanismus (6) die Teleskopeinheit (3) an zumindest zwei unterschiedlichen Koppelpositionen an die Stützeinheit (2) ankoppelbar ist.

3. Teleskopierbare Sattelstütze nach einem der vorangehenden Ansprüche, wobei die Teleskopeinheit (3) rohrförmig ausgebildet ist und die Stützeinheit (2) und/oder die Koppelvorrichtung (4) zumindest teilweise innerhalb der Teleskopeinheit (3) angeordnet ist.

4. Teleskopierbare Sattelstütze nach einem der vorangehenden Ansprüche, wobei der Verstellmechanismus (6) der Koppelvorrichtung (4) einen der Teleskopeinheit (3) zugeordneten Verstellteil (7) in Form einer Hülse (11), einer Spindel oder einer Zahnstange (12) mit einer profilierten Einkerbung (21, 25) aufweist.

5. Teleskopierbare Sattelstütze nach dem vorangehenden Anspruch, wobei die profilierte Einkerbung (21, 25) im Verstellteil (7) in Form eines Gewindes oder in Form von, vorzugsweise umfänglich begrenzten, Radialnuten (25) oder radialen Vorsprüngen (21) und/oder die profilierte Einkerbung (22, 26) im Koppelteil (8) in Form eines Gewindes oder in Form von, vorzugsweise umfänglich begrenzten, Radialnuten (22) oder radialen Vorsprüngen (26) ausgebildet sind.

6. Teleskopierbare Sattelstütze nach einem der vorangehenden Ansprüche, wobei die Teleskopeinheit (3) eine axiale und/oder radiale Öffnung (9) aufweist, durch welche die Koppelvorrichtung (4) von außerhalb der Teleskopeinheit (3), vorzugsweise über einen Hebel (10), betätigbar ist.

7. Teleskopierbare Sattelstütze nach dem vorangehenden Anspruch, wobei durch die axiale und/oder radiale Öffnung (9) in der Teleskopeinheit (3) der Verstellteil (6) des Verstellmechanismus (6) relativ zur Teleskopeinheit (3) verdrehbar ist.

8. Teleskopierbare Sattelstütze nach einem der Ansprüche 4 bis 7, wobei der Koppelteil (8) drehfest an der Stützeinheit (2) gelagert ist.

9. Teleskopierbare Sattelstütze nach einem der vorangehenden Ansprüche, wobei die Koppelvorrichtung (4) unabhängig von der Blockiervorrichtung (5) betätigbar ist.

10. Teleskopierbare Sattelstütze nach einem der vorangehenden Ansprüche, wobei die geführte Bewegung eine durch den vorgegebenen Teleskopierbereich begrenzte, zwangsgeführte translatorische Teleskopierbewegung der Teleskopeinheit (3) relativ zur Stützeinheit (2) ist.

11. Teleskopierbare Sattelstütze nach einem der vorangehenden Ansprüche, wobei die Blockiervorrichtung (5) hydraulisch ausgebildet ist.

12. Teleskopierbare Sattelstütze nach einem der vorangehenden Ansprüche, wobei die Stützeinheit (2) eine Befestigungseinrichtung (13) aufweist und die Sattelstütze (1) über die Befestigungseinrichtung (13) mit einem Rahmen (18) eines Fahrrads verbindbar, vorzugsweise formschlüssig verbindbar, ist.

13. Teleskopierbare Sattelstütze nach einem der vorangehenden Ansprüche, wobei die Blockiervorrichtung (5) einen Kraftspeicher, vorzugsweise einen pneumatischen Kraftspeicher, aufweist.

## Claims

1. A telescopic seatpost for mounting a bicycle saddle, comprising
- a support unit (2) which can be fixed to or in a frame of a bicycle, and
- a telescopic unit (3) moveably guided within a predetermined telescopic range relative to the support unit (2), wherein the telescopic range extends from a minimum longitudinal extent of the seatpost (1) to a maximum longitudinal extent of the seatpost (1),
- a coupling device (4) arranged beween the telescopic unit (3) and the support unit (2), wherein a part of the coupling device (4), that is associated with the support unit (2), is fixedly connected to the support unit (2) and wherein the telescopic unit (3) can be coupled to the support unit (2) by way of the coupling device (4),
- a blocking device (5) for releasably blocking the guided telescopic movement of the telescopic unit (3) relative to the support unit (2),
the coupling device (4) has an adjustment mechanism (6), by way of which the maximum longitudinal extent of the seatpost (1) is adjustable, and transmission of an axial force acting on the telescopic unit (3) to the support unit (2) is effected by way of the coupling device (4), wherein the adjustment mechanism (5) of the coupling device (4) has an adjustment part (7) associated with the telescopic unit (3) with a profiled notching (21, 25) and a coupling part (8) associated with the support unit (2) and having a corresponding profiled notching (22, 26) for positively locking connection of the telescopic unit (3) to the support unit (2), wherein the adjustment part (7) is mounted rotatably in or to the telescopic unit (3) and the telescopic unit (3) can be coupled to the support unit (2) by a rotary movement of the adjustment part (7) relative to the coupling part (8), **characterized in that** the adjustment part (7) is mounted rotatably in an inner region of the tubular telescopic unit (3) and is arranged coaxially with the telescopic unit (3).

2. A telescopic seatpost as set forth in claim 1 wherein the telescopic unit (3) can be coupled to the support unit (2) at at least two different coupling positions by way of the adjustment mechanism (6).

3. A telescopic seatpost as set forth in one of the preceding claims wherein the telescopic unit (3) is of a tubular configuration and the support unit (2) and/or the coupling device (4) is at least partially arranged within the telescopic unit (3).

4. A telescopic seatpost as set forth in one of the preceding claims wherein the adjustment mechanism (5) of the coupling device (4) has an adjustment part (7) associated with the telescopic unit (3) in the form of a sleeve (11), a spindle or a toothed rack (12).

5. A telescopic seatpost as set forth in the preceding claim wherein the profiled notching (21, 25) in the adjustment part (7) is in the form of a thread or in the form of, preferably peripherally limited, radial grooves (25) or radial projections (21) and/or the profiled notching (22, 26) in the coupling part (8) is in the form of a thread or in the form of, preferably peripherally restricted, radial grooves (22) or radial projections (26).

6. A telescopic seatpost as set forth in one of the preceding claims wherein the telescopic unit (3) has an axial and/or radial opening (9), through which the coupling device (4) is actuable from outside the telescopic unit (3), preferably by way of a lever (10).

7. A telescopic seatpost as set forth in the preceding claim wherein the adjustment part (4) of the adjustment mechanism (6) is rotatable relative to the telescopic unit (3) through the axial and/or radial opening (9) in the telescopic unit (3) .

8. A telescopic seatpost as set forth in one of claims 4 through 7 wherein the coupling part (8) is mounted non-rotatably to the support unit (2).

9. A telescopic seatpost as set forth in one of the preceding claims wherein the coupling device (4) is actuable independently of the blocking device (5).

10. A telescopic seatpost as set forth in one of the preceding claims wherein the guided movement is a positively guided translatory telescopic movement, that is restricted by the predetermined telescopic range, of the telescopic unit (3) relative to the support unit (2).

11. A telescopic seatpost as set forth in one of the preceding claims wherein the blocking device (5) is hydraulic.

12. A telescopic seatpost as set forth in one of the preceding claims wherein the support unit (2) has a fixing device (13) and the saddle support (1) can be connected, preferably in positively locking relationship, to a frame (18) of a bicycle by way of the fixing device (13).

13. A telescopic seatpost as set forth in one of the preceding claims wherein the blocking device (5) has a force storage means, preferably a pneumatic force storage means.

## Revendications

1. Tige de selle télescopique (1) destinée au montage d'une selle de bicyclette, avec
- une unité d'appui (2), laquelle peut être fixée sur ou dans un cadre de bicyclette, et
- une unité télescopique (3) pouvant être déplacée de manière guidée par rapport à l'unité d'appui (2) à l'intérieur d'une zone télescopique prédéfinie, dans laquelle la zone télescopique s'étend depuis une extension longitudinale minimale de la tige de selle (1) jusqu'à une extension longitudinale maximale de la tige de selle (1),
- un dispositif de couplage (4) disposé entre l'unité télescopique (3) et l'unité d'appui (2), dans laquelle une partie, associée à l'unité d'appui (2), du dispositif de couplage (4) est reliée de manière fixe à l'unité d'appui (2) et dans laquelle l'unité télescopique (3) peut être accouplée à l'unité d'appui (2) par l'intermédiaire du dispositif de couplage (4),
- un dispositif de blocage (5) destiné au blocage amovible du déplacement télescopique guidé de l'unité télescopique (3) par rapport à l'unité d'appui (2),
dans laquelle le dispositif de couplage (4) présente un mécanisme d'ajustement (6), par l'intermédiaire duquel l'extension longitudinale maximale de la tige de selle (1) peut être ajustée, et un transfert d'une force axiale agissant sur l'unité télescopique (3) sur l'unité d'appui (2) est effectué par l'intermédiaire du dispositif de couplage (4), dans laquelle le mécanisme d'ajustement (6) du dispositif de couplage (4) présente une partie d'ajustement (7) associée à l'unité télescopique (3), avec une encoche profilée (21, 25) et présente une partie de couplage (8) associée à l'unité d'appui (2), avec une encoche profilée (22, 26) correspondante destinée à relier par complémentarité de forme l'unité télescopique (3) à l'unité d'appui (2), dans laquelle la partie d'ajustement (7) est montée de manière à pouvoir tourner dans ou sur l'unité télescopique (3) et l'unité télescopique (3) peut être accouplée à l'unité d'appui (2) par un déplacement de rotation de la partie d'ajustement (7) par rapport à la partie de couplage (8), **caractérisée en ce que** la partie d'ajustement (7) est montée de manière à pouvoir tourner dans une zone intérieure de l'unité télescopique (3) réalisée de manière tubulaire et est disposée de manière coaxiale avec l'unité télescopique (3).

2. Tige de selle télescopique selon la revendication 1, dans laquelle l'unité télescopique (3) peut être accouplée à l'unité d'appui (2) sur au moins deux positions de couplage différentes par l'intermédiaire du mécanisme d'ajustement (6).

3. Tige de selle télescopique selon l'une quelconque des revendications précédentes, dans laquelle l'unité télescopique (3) est réalisée de manière tubulaire et l'unité de tige (2) et/ou le dispositif de couplage (4) sont disposés au moins en partie à l'intérieur de l'unité télescopique (3).

4. Tige de selle télescopique selon l'une quelconque des revendications précédentes, dans laquelle le mécanisme d'ajustement (6) du dispositif de couplage (4) présente une partie d'ajustement (7) associée à l'unité télescopique (3) sous la forme d'une douille (11), d'une broche ou d'une crémaillère (12) avec une encoche profilée (21, 25).

5. Tige de selle télescopique selon la revendication précédente, dans laquelle l'encoche profilée (21, 25) est réalisée dans la partie d'ajustement (7) sous la forme d'un filetage ou sous la forme de rainures radiales (25) de préférence délimitées en périphérie ou de parties faisant saillie radiales (21) et/ou l'encoche profilée (22, 26) dans la partie de couplage (8) est réalisée sous la forme d'un filetage ou sous la forme de rainures radiales (22) délimitées de préférence en périphérie ou de parties faisant saillie radiales (26).

6. Tige de selle télescopique selon l'une quelconque des revendications précédentes, dans laquelle l'unité télescopique (3) présente une ouverture axiale et/ou radiale (9), par laquelle le dispositif de couplage (4) peut être actionné depuis l'extérieur de l'unité télescopique (3), de préférence par l'intermédiaire d'un levier (10).

7. Tige de selle télescopique selon la revendication précédente, dans laquelle la partie d'ajustement (6) du mécanisme d'ajustement (6) peut être tournée par rapport à l'unité télescopique (3) par l'ouverture axiale et/ou radiale (9) dans l'unité télescopique (3).

8. Tige de selle télescopique selon l'une quelconque des revendications 4 à 7, dans laquelle la partie de couplage (8) est montée de manière solidaire en rotation sur l'unité d'appui (2).

9. Tige de selle télescopique selon l'une quelconque des revendications précédentes, dans laquelle le dispositif de couplage (4) peut être actionné indépendamment du dispositif de blocage (5).

10. Tige de selle télescopique selon l'une quelconque des revendications précédentes, dans laquelle le déplacement guidé est un déplacement télescopique par translation guidé de manière forcée, délimité par la zone télescopique prédéfinie de l'unité télescopique (3) par rapport à l'unité d'appui (2).

11. Tige de selle télescopique selon l'une quelconque des revendications précédentes, dans laquelle le dispositif de blocage (5) est réalisé de manière hydraulique.

12. Tige de selle télescopique selon l'une quelconque des revendications précédentes, dans laquelle l'unité d'appui (2) présente un système de fixation (13) et la tige de selle (1) peut être reliée, de préférence peut être reliée par complémentarité de forme, à un cadre (18) d'une bicyclette par l'intermédiaire du système de fixation (13).

13. Tige de selle télescopique selon l'une quelconque des revendications précédentes, dans laquelle le dispositif de blocage (5) présente un accumulateur de force, de préférence un accumulateur de force pneumatique.
